# EUROPEAN PATENT APPLICATION

(11) **EP 1 065 893 A2**
(43) Date of publication of application: **03.01.2001**
(21) Application number: 00305218.0
(22) Date of filing: 20.06.2000
(51) Int. Cl.: H04Q 3/00

(54) **Call waiting service in an intelligent network**

(30) Priority: 30.06.1999 US 343339
(71) Applicant: LUCENT TECHNOLOGIES INC., Murray Hill, New Jersey 07974-0636 (US)
(72) Inventor: Briggs, Barry Ward, Naperville, Illinois 60565 (US); Huen, Wing Hing, Aurora, Illinois 60504 (US); Hua, Shiyan, Wheaton, Illinois 60187 (US)
(74) Representative: Buckley, Christopher Simon Thirsk

(57) **Abstract**

A public switched telephone system with an intelligent network (IN) for automated call processing is compatible with Call Waiting service. Unlike prior art systems in which a customer placing a call handled by an IN must disable Call Waiting service during an entire transaction (initial call placement, connection to the destination and conversation until the parties "hang up") to avoid non-processing or mis-processing by the IN, a customer using the present invention need only disable Call Waiting when communicating with an Intelligent Peripheral during the initial call placement. The system automatically restores Call Waiting after the call has been routed so that the feature is available during a telephone conversation.

## Description

### Field Of The Invention

The present invention generally relates to intelligent-networked telephone systems. More particularly, the present invention relates to improvements in intelligent-networked telephone systems interfacing with customers having Call Waiting service.

### Background Of Related Art

Intelligent Networks (INs) are computer-based telephone networks used for providing the broadest possible range of sophisticated telephone services and features in a distributed environment. For example, in an IN-based telephone system, a customer can dial a service access code (SAC) to connect to the IN for the processing of a call. The IN receives information such as the calling line identification (CLI) from the origination telephone line, and the calling card number, PIN, and destination number from the customer (when a calling card transaction is involved).

A service control point (SCP) compares information received from the customer with information stored in its database (calling card number, PIN, etc.). The SCP decides whether a call is authorized, and if so directs the IN to connect the call to the destination number. The components of an IN may be connected with a high-speed link utilizing, for example, the Intelligent Network Application Protocol (INAP), as approved by the European Telecommunications Standards Institute (ETSI) and International Telecommunication Unit (ITU). Such a system combines high transaction processing speed with reduced errors.

Call Waiting service allows a customer engaged in a conversation with a second party to receive an audible signal indicating that a third party is attempting to call the customer, wherefore the customer can either end the current conversation and connect to the third party, place the second party on hold and connect to the third party, or ignore the third party's attempts.

It has been discovered that while an IN is processing a telephone transaction such as routing a call, a call-waiting signal can cause confusion in the IN, leading to non-routed or mis-routed calls. The prior art solution to this problem is for the customer to disable the call-waiting function during the entire transaction. This is accomplished by the customer inputting, via the alphanumeric keypad on a telephonic device, a prefix code such as "*70" before dialing a destination number. While this eliminates mis-routing and non-routing problems for call-waiting service customers, call waiting is not available to prompt a customer about third party calls while the customer is engaged in a telephone conversation during an IN-routed call.

Accordingly, what is sorely lacking in the prior art is an IN-based telephone system which can process a call originating from a customer with call-waiting service, without the customer having to disable the call-waiting feature during the entire call.

### Summary Of The Invention

In view of the above-identified problems and limitations of the prior art, the present invention provides a public switched telephone system for processing telephone transactions at least including:
a plurality of input telephonic devices, each operatively coupled to an origination telephone line, the input telephonic device at least including an alphanumeric information generator adapted to at least transmit telephone transaction information;
an automated intelligent network (IN) coupled to origination telephone lines adapted to process telephone transactions, the IN at least including a service control point (SCP), and the IN being adapted to authorize and direct the routing of telephone calls; and
at least one switch operatively coupled to origination telephone lines and to the SCP, the switch adapted to receive command and information signals from a telephone customer via an origination telephone line, the switch routing calls authorized by, and under the direction of the SCP to a destination number specified by the customer;
   wherein the switch is adapted to temporarily disable a call-waiting feature of a customer when communicating with an Intelligent Peripheral prior to the SCP sending call routing instructions, the switch routes a telephone call under the direction of the SCP, and the switch is adapted to automatically restore a temporarily disabled call-waiting feature upon connection of the customer to a destination telephone number.

The present invention also provides, in a public switched telephone system, a method for processing telephone calls for a customer having call-waiting service, the method at least including the steps of:
via a plurality of input telephonic devices, each operatively coupled to an origination telephone line, transmitting telephone transaction information from a customer;
via an automated intelligent network (IN) coupled to origination telephone lines and at least including a service control point (SCP), authorizing and directing the routing of telephone calls;
via at least one switch operatively coupled to origination telephone lines and to the SCP, receiving command and information signals from a telephone customer via an origination telephone line, and routing calls authorized by, and under the direction of the SCP to a destination number specified by the customer; and
via the switch, temporarily disabling a call-waiting feature of a customer when communicating with an Intelligent Peripheral prior to the SCP sending call routing instructions, routing a telephone call under the direction of the SCP, and automatically restoring a temporarily disabled call-waiting feature upon connection of the customer to a destination telephone number.

### Brief Description Of The Drawing Figures

Features and advantages of the present invention will become apparent to those skilled in the art from the description below, with reference to the following drawing figures, in which:
Figure 1 is a schematic block diagram of the basic hardware for the present-inventive IN-based telephone system with Call-Waiting compatibility; and
Figure 2 is flowchart describing the method/call flow utilized by the present invention.

### Description Of The Preferred Embodiments

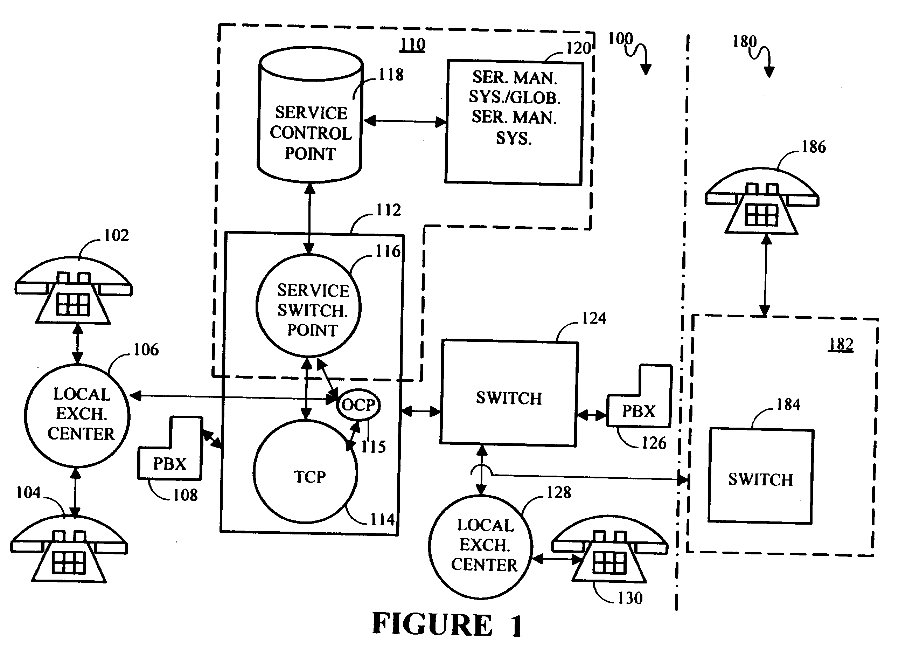

The basic hardware of the intelligent-networked public switched telephone system 100/180 capable of integrating call-waiting service is illustrated in Figure 1.

The system 100/180 combines a domestic network 100, as in the United States, for example, and a foreign network 180, as in Europe, for example. The system 100/180 includes a variety of telephonic input devices as would be common in a general telephone system. A customer can connect to the network 100 using such devices as common telephones 102 and 104. For example, a customer can attempt to complete a telephone transaction (with or without a telephone calling card) using a telephone which is part of a private branch exchange (PBX) as is known in the art. The telephones include alphanumeric keypads for inputting Dual-Tone-Multi-Frequency (DTMF) signals, or the like, as is common.

In addition to destinations such as those represented by the numbers 126 and 130, the switch 112 can also connect a call to a foreign network 180, Similar to the domestic network 100, the foreign network contains an intelligent network 182, including a switch 184 similar to the switches 112 and 124. The destination number might be a telephone number (186) in a foreign country.

The interface between the SSP 116 and the SCP 118 uses the ETSI/INAP or ITU/INAP protocol for speed and compatibility, as does the interface between the SSP 116 and the OCP 115.

In addition to having an OCP, the switches in the present invention also include intelligent peripherals (114) using the Transmission Control Protocol/Internet Protocol to aid in transaction processing.

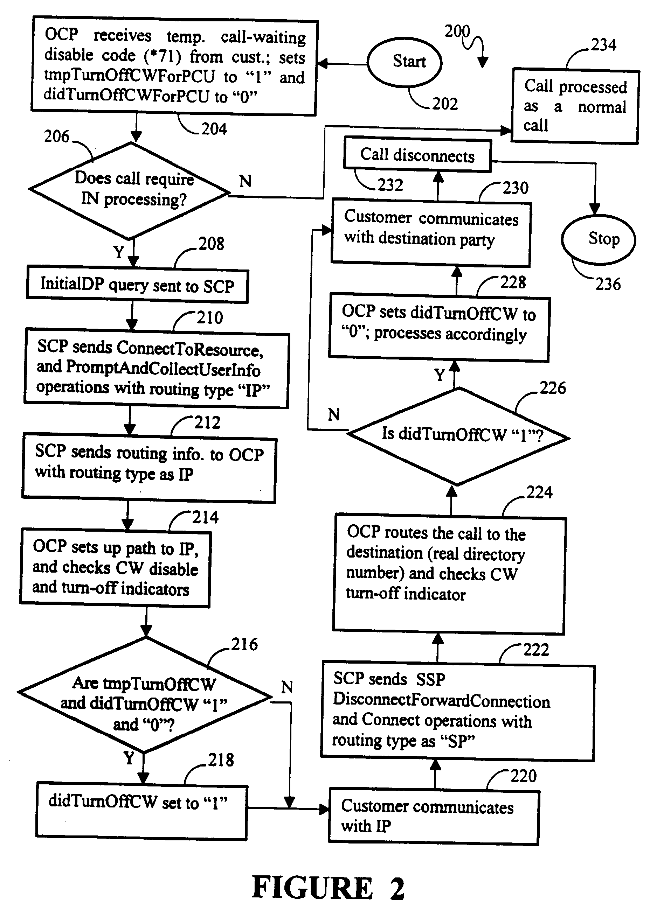

The call flow (an algorithm detailing call handling in a system) of the present-inventive system 100/180 is graphically depicted in Figure 2. When a customer with Call-Waiting (CW) service desires to place call to be processed by the IN 110, the customer includes in the digits dialed, a prefix serving as a call-waiting temporary disable code. In the preferred embodiment, the call-waiting temporary disable code is "*71", although it will be appreciated by those skilled in the art that the code may be different. Dialing "*71" as opposed to "*70" indicates that the customer wishes only to disable the call-waiting service when communicating with an Intelligent Peripheral during the initial processing phase of a telephone call, but would like to have call-waiting service restored once the customer is connected to the destination party (i.e., during conversations, etc.). In contrast, dialing "*70" (used in prior art systems, but compatible with the present invention) indicates that the customer wishes to disable the call-waiting service during the entire telephone call, including the conversation portion.

After the start (Step 202) of the present-inventive algorithm 200, the OCP receives a temporary call-waiting disable code (*71) from the customer. In response, the OCP sets a call-waiting temporary disable indicator (tmpTurnOffCWForPCU) to "1" and a call-waiting turn-off indicator (didTurnOffCWForpCU) to "0" (Step 204). The indicators may be electronic registers within the OCP.

If the telephone call requires the IN for transaction processing (decided at Step 206) the algorithm advances to Step 208. Otherwise, the call is processed as a normal call in Step 234, and the call-waiting temporary disable indicator will be ignored. To determine whether the call is to be handled by the IN, the OCP performs digits analysis on the string of digits dialed by the customer.

In Step 208 the SSP sends a query message (InitialDP) to the SCP to begin the call processing. In response the SCP sends ConnectToResource and PromptAndCollectUserInformation messages to the switch 112. The routing type in this case is set to "IP," which means the destination is an Intelligent Peripheral so that OCP knows the call should be routed to an Intelligent Peripheral, and that the call-waiting shall be turned off if tmp TurnOffCW is set to "1" (Step 210).

The OCP checks the call-waiting temporary disable and call-waiting turn-off indicators in Step 214. If the tmpTurnOffCW is set "1", and call-waiting has not been disabled (didTurnOffCW = 0) as determined in Step 216, the OCP disables call-waiting in Step 218 by setting the didTurnOffCW indicator equal to "1" and conducting the corresponding processing. Otherwise, the OCP skips Step 218 and advances to Step 220. In Step 220, the intelligent peripheral 114 prompts the user for information such as a destination number and calling card information such as a security code if a calling card is used.

After the customer is finished communicating with the IP, the SCP sends DisconnectForwardConnection and Connect operation signals to the SSP, with routing type set as "SP" which means the destination is a real directory number (Step 222).

In Step 224, the SSP routes the call to the destination number according to instructions in the SCP's Connect message, and then the SSP checks the call waiting turn-off indicator. If the call-waiting turn-off indicator is still set to "1" (ascertained in Step 226) indicating that call-waiting is still turned off, the OCP sets the call-waiting turn-off indicator to "0" in Step 228, restoring call-waiting service. If the call-waiting turn-off indicator has already been set to "0" (call-waiting is activating), the algorithm skips Step 228. In Step 230, the customer can communicate with the destination party in with activated call-waiting service.

After the call has been completed (Step 232), the call flow ends at Step 236.

The aforementioned method is also compatible with calling card transactions in which the calling card customer can place several separate telephone calls ("follow-on calls") without returning to the on-hook condition. In such transactions the IN and OCP temporarily disable call-waiting during the processing and routing of each call, and restore call-waiting upon connection of each call with the destination party. The call flow of such follow-on transactions is also governed by the algorithm 200 in Figure 2.

Variations and modifications of the present invention are possible, given the above description. However, all variations and modifications which are obvious to those skilled in the art to which the present invention pertains are considered to be within the scope of the protection granted by this Letters Patent.

## Claims

1. A public switched telephone system for processing telephone transactions comprising:
a plurality of input telephonic devices, each operatively coupled to an origination telephone line, said input telephonic device comprising an alphanumeric information generator adapted to at least transmit telephone transaction information;
an automated intelligent network (IN) coupled to origination telephone lines adapted to process telephone transactions, said IN comprising a service control point (SCP), and said IN being adapted to authorize and direct the routing of telephone calls; and
at least one switch operatively coupled to origination telephone lines and to said SCP, said switch adapted to receive command and information signals from a telephone customer via an origination telephone line, said switch routing calls authorized by, and under the direction of said SCP to a destination number specified by said customer;
wherein said switch is adapted to temporarily disable a call-waiting feature of a customer when communicating with an Intelligent Peripheral prior to the SCP sending call routing instructions, said switch routes a telephone call under the direction of the SCP, and said switch is adapted to automatically restore a temporarily disabled call-waiting feature upon connection of the customer to a destination telephone number.

2. The telephone in Claim 1 wherein said switch is adapted to receive a call-waiting temporary disable code from said customer to trigger a temporary call-waiting disabling episode, said code being part of command and information signals received from a customer, including a destination telephone number.

3. The system in Claim 2 wherein said call-waiting temporary disable code is distinct from a call-waiting transaction disable code, said call-waiting transaction disable code indicating a desire on the part of the customer to disable a call-waiting feature during an entire telephone call, including a conversation with a destination party.

4. The system in Claim 2 wherein said call-waiting temporary disable code is in the form of a prefix in a string of digits including a destination telephone number.

5. The system in Claim 1 wherein said switch further comprises a service switching point (SSP) adapted to make connections between a customer's origination line and a destination telephone number, and an Original Call Processor (OCP) adapted to interface between said customer and said switch, and said between said switch and said SCP.

6. The system in Claim 5 wherein said OCP comprises a call-waiting temporary disable indicator and a call-waiting turn-off indicator, said call-waiting temporary disable indicator have an active state and a non-active state, and said call-waiting turn-off indicator having an active state and a non-active state.

7. The system in Claim 6 whereupon receiving said call-waiting temporary disable code, said call-waiting temporary disable indicator is set to the active state, and said call-waiting turn-off indicator is set to the non-active state, and upon a telephone call being connected to a destination number, said call-waiting temporary disable indicator is set to the non-active state, and said call-waiting turn-off indicator is set to the active state.

8. The system in Claim 5 further comprising an SSP/SCP interface between said SSP and said SCP, and an OCP/SSP interface between said OCP and said SSP, said SSP/SCP and OCP/SSP interfaces utilizing an ETSI/INAP protocol.

9. The system in Claim 5 further comprising an SSP/SCP interface between said SSP and said SCP, and an OCP/SSP interface between said OCP and said SSP, said SSP/SCP and OCP/SSP interfaces utilizing an ITU/INAP protocol.

10. In a public switched telephone system, a method for processing telephone calls for a customer having call-waiting service, said method comprising the steps of:
via a plurality of input telephonic devices, each operatively coupled to an origination telephone line, transmitting telephone transaction information from a customer;
via an automated intelligent network (IN) coupled to origination telephone lines and comprising a service control point (SCP), authorizing and directing the routing of telephone calls;
via at least one switch operatively coupled to origination telephone lines and to said SCP, receiving command and information signals from a telephone customer via an origination telephone line, and routing calls authorized by, and under the direction of said SCP to a destination number specified by said customer; and
via said switch, temporarily disabling a call-waiting feature of a customer when communicating with an Intelligent Peripheral prior to the SCP sending call routing instructions, routing a telephone call under the direction of said SCP, and automatically restoring a temporarily disabled call-waiting feature upon connection of the customer to a destination telephone number.

11. The method in Claim 10 further comprising the step of, via said switch, triggering a temporary call-waiting disabling episode upon receiving a call-waiting temporary disable code from said customer, said code being part of command and information signals received from a customer, including a destination telephone number.

12. The method in Claim 11 wherein said call-waiting temporary disable code is distinct from a call-waiting transaction disable code, said call-waiting transaction disable code indicating a desire on the part of the customer to disable a call-waiting feature during an entire telephone call, including a conversation with a destination party.

13. The method in Claim 11 wherein said call-waiting temporary disable code is in the form of a prefix in a string of digits including a destination telephone

14. The method in Claim 11 further comprising the steps of, via a service switching point (SSP) subsumed by said switch, making connections between a customer's origination line and a destination telephone number, and via an Original Call Processor (OCP) subsumed by said switch, interfacing between said customer and said switch, and interfacing between said switch and said SCP.

15. The method in Claim 14 further comprising the step of:
providing a call-waiting temporary disable indicator and a call-waiting turn-off indicator, both subsumed by said OCP, said call-waiting temporary disable indicator have an active state and a non-active state, and said call-waiting turn-off indicator having an active state and a non-active state.

16. The method in Claim 15 whereupon receiving said call-waiting temporary disable code, said call-waiting temporary disable indicator is set to the active state, and said call-waiting turn-off indicator is set to the non-active state, and upon a telephone call being connected to a destination number, said call-waiting temporary disable indicator is set to the non-active state, and said call-waiting turn-off indicator is set to the active state.

17. The method in Claim 14 further comprising the steps of:
providing an SSP/SCP interface between said SSP and said SCP, and providing an OCP/SSP interface between said OCP and said SSP, said SSP/SCP and OCP/SSP interfaces utilizing an ETSI/INAP protocol.

18. The method in Claim 14 further comprising the steps of:
providing an SSP/SCP interface between said SSP and said SCP, and providing an OCP/SSP interface between said OCP and said SSP, said SSP/SCP and OCP/SSP interfaces utilizing an ITU/INAP protocol.

19. The method in Claim 14 further comprising the steps of:
when said call-waiting temporary disable indicator is in the active state and a "routing type" is "Intelligent Peripheral" (IP), via said OCP, deactivating the call-waiting functionality; and
when said routing type is "real directory number" (SP), via said OCP, activating the call-waiting functionality.
